# EUROPEAN PATENT SPECIFICATION

(11) **EP 0 977 491 B1**
(45) Date of publication and mention of the grant of the patent: **19.06.2002**
(21) Application number: 98924152.6
(22) Date of filing: 20.04.1998
(51) Int. Cl.: A23G 3/24, A23G 3/20, A23G 3/00

(54) **A PROCESS AND ASSOCIATED DEVICE FOR PARTIAL ENROBING OF FOOD PRODUCTS**
VERFAHREN UND VORRICHTUNG ZUM TEILWEISE BESCHICHTEN VON LEBENSMITTEL
PROCEDE ET DISPOSITIF ASSOCIE POUR L'ENROBAGE PARTIEL DE PRODUITS ALIMENTAIRES

(30) Priority: 23.04.1997 CH 94197
(43) Date of publication of application: 09.02.2000
(73) Proprietor: Ferrero S.p.A., 12051 Alba (Cuneo) (IT); FERRERO OFFENE HANDELSGESELLSCHAFT m.b.H., 60599 Frankfurt (DE)
(72) Inventor: PEDROTTO, Gianfranco, I-12050 Neviglie (Cuneo) (IT)
(74) Representative: Rambelli, Paolo
(86) International application number: EP9802317
(87) International publication number: WO9847388

(56) References cited:
- DE-A- 2 317 747
- DE-A- 3 311 768
- GB-A- 301 911
- GB-A- 1 572 464
- GB-A- 2 099 276
- GB-A- 2 193 073
- US-A- 2 946 689
- US-A- 3 717 752
- PATENT ABSTRACTS OF JAPAN vol. 004, no. 085 (C-015), 18 June 1980 & JP 55 050857 A (YOUGASHINOHIROTA:KK), 14 April 1980
- PATENT ABSTRACTS OF JAPAN vol. 014, no. 197 (C-0712), 23 April 1990 & JP 02 039857 A (FUMIHIKO MASUDA), 8 February 1990

## Description

The present invention relates to a process for partial enrobing of food products, such as, for example, confectionery products.

In the food product industry, and especially in the confectionery product industry, the term "enrobing" is in general utilised to indicate the operation of cladding a product with a layer of a food substance such as, for example, chocolate, which is in the molten state upon application. Enrobing can possibly be followed by the application of further covering material, for example, granular materials such as chopped nuts, grated coconut etc. There is also the possibility of a further application of an additional enrobing layer.

The prior art is very extensive as is demonstrated, for example, by EP-A-0 610 840, which describes just such a process and a device for the application of a layer of granular material onto a preceding enrobing layer or by commercial products such as the products sold under the commercial names of "Rocher", "Raffaello Confetteria", Giotto", "Tonus" by the Ferrero group of companies.

In general, in all prior art arrangements mentioned above, the enrobing layer is intended completely to clad a product; this result is obtainable with different techniques, all however involving the spraying of the product with a material intended to constitute the enrobing layer.

If, on the other hand, for various reasons, the enrobing layer must be such as not to cover the product entirely, but only part of it, evident problems of a technical nature arise.

In EP-A-0 554 707 and EP-A-0 680 701 there have already been proposed arrangements which allow, for example, a praline to have a decorative cap of material such as chocolate. Although in one sense a cap of this type could be equated to a partial enrobing of the product, it is to be noted that, in both cases cited above, the cap is intended in practice to cover only a part of the top of the product. There therefore exists an objective difficulty in extending the cladding or covering layer - in such a way as to go as far as covering practically all the surface of the product except a small portion thereof, for example a polar part, where it is desired for example to apply a decorative formation.

In each case, then, the arrangement of EP-A-0 554 707 is essentially similar to a spraying process, sometimes capable of giving rise to slight asymmetries in the covering applied. Such possible asymmetries, although entirely acceptable or, for other reasons - even welcomed in the case of a cladding cap intended to confer to the product as aspect generally similar to that of a "choux bun" ("bignola"), can be absolutely undesirable in the case of products of a different type.

The arrangement of EP-A-0 680 701 on the other hand provides that the cap be constituted by a certain mass of food material stuck to the interior of a blank of the product wrapping with a view to subsequent introduction of the product into the wrapping itself. Independently from any other consideration given above, this arrangement provides that the layer of cladding is formed at the moment of, and by the action of, inserting the product into the wrapping: this therefore does not involve an arrangement which can be proposed in the case in which the possible layer of enrobing must be in turn covered, for example, with a layer of granular material.

More specifically, the present invention relates to a process and a device according to the preambles of claims 1 and 6, which are known e.g. from US-A-2 946 689 or the Patent Abstracts of Japan, vol. 004, No.085 (C-015), 18 June 1980 & JP 55 050 857.

Also DE-A-23 17 747 and DE-A-33 11 768 are of interest for the invention.

Further factors must then be taken into consideration.

In the first place, the enrobing which it is desired to form is constituted by a mass of usually rather dense food, which is therefore markedly viscous, such as chocolate, food cremes of various type (also non-confectionery), etc..

It is not to be forgotten that the context of the invention is that of the manufacture of food products on an industrial scale: the time taken to produce individual products must consequently be short, which translates of necessity into the requirement to make the products pass through respective preparation cycles in short times, and thus, at least in some cases, with rather significant speeds of advance.

The invention therefore aims at achieving the object of providing a process able to satisfy all the above-explained requirements in a complete manner, resolving the intrinsic difficulties of the prior art. According to the invention, this object is achieved by a process for partially enrobing food products having the further characteristics set out in claim 1. Advantageous developments of the invention form the subject of claims 2 to 5.

The invention also relates to a device for putting the said process into operation. This device forms the subject of claim 6. Advantageous developments of this device form the subject of claims 7 to 10.

The invention will now be described purely by way of non-limitative example, with reference to the attached drawings comprising eight figures which illustrate in an idealised sequence the successive phases of the process according to the invention.

It is to be noted that the sequence illustrated, as well as the individual elements of the device illustrated, have a purely exemplary character and must not be interpreted as unduly limitative of the scope of the invention as defined in the appended claims.

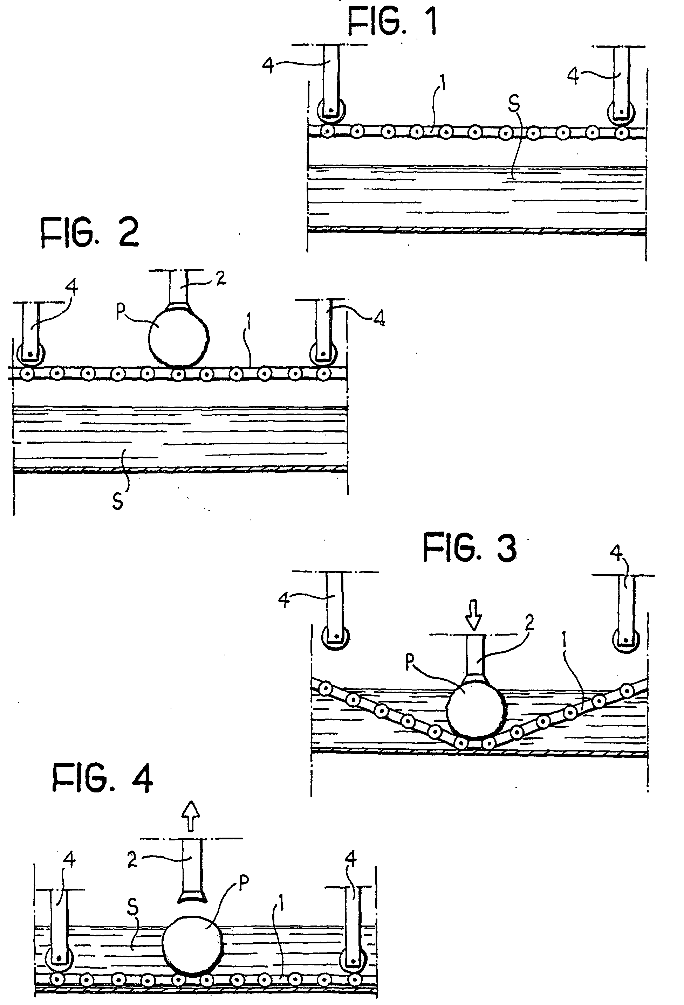

In particular, figure 1 shows a mass of food substance S as such as, for example, chocolate, intended to constitute a so-called enrobing layer on a food product constituted for example by a praline P.

The substance S, contained in a corresponding recipient such as a tank, may however be any food substance capable of being used for enrobing.

The reference numeral 1 indicates a support element constituted, in the exemplary embodiment illustrated, by a part of one section of an apertured transport conveyor such as a so-called enrobing mesh. Conveyors of this type are currently used in the confectionery industry and are usually in the form of a driven conveyor belt constituted in practice by a net or by connected rods. The upper branch of such a conveyor is thus able to constitute a support surface on which the products P to be covered are deposited so as then to be subjected to the enrobing operation.

In the prior art arrangements this operation ensures that the products which are on the mesh are covered by the substance intended to constitute the enrobing layer, which is sprayed onto the products P themselves and can fall through the apertures of the mesh.

As already mentioned, in the prior art arrangements, this mode of operation is intended to result in the formation of an enrobing layer which covers the entire outer surface of the product P. For this reason, still with the conventional arrangements, the product P itself is subjected to successive changes in its spatial orientation during the enrobing operations. Usually, this is obtained by transferring the product from a first conveyor (enrobing mesh) to one or more further similar conveyors.

In the context of the present invention the fact that the support element 1 on which the products to be covered are deposited (for a partial enrobing) is constituted by a conveyor, and especially by a conveyor of the type currently known as an enrobing mesh, constitutes a preferential but not essential arrangement. In other words, for reasons which will become clearer hereinafter, the support 1 does not have to be necessarily constituted by a conveyor capable of a form of net translation (horizontal in the embodiment illustrated) with respect to the substance S intended to constitute the covering.

Still with reference to the starting situation illustrated in Figure 1, it will be noted that the support element 1 is maintained slightly raised, for example by a distance of several mm, above the free surface of the substance S.

Figure 2 shows the operation which leads to the disposition of the product P to be enrobed, above the conveyor 1. For reasons which will become clearer hereinafter, this operation is achieved preferably (but not necessarily) by positive grip elements which act on the products P from the upper part thereof. This could, for example, relate to subatmospheric pressure grip devices, the active element of which, intended to act on the product P, is constituted by a kind of sucker. This latter has an axial cavity in which, because of its connection to a source of subatmospheric pressure (not illustrated) there is selectively created a pressure level lower than that of the surrounding environment: the corresponding pressure gradient provides retention of the article P on the grip element 2. Devices of this type are widely known in the art as shown, for example, by published European patent application EP-A-0 768 254.

Figure 3 illustrates how, in the subsequent phase of the process, the grip element 2 utilised to locate the product P onto the support element 1 is also utilised by the effect of a lowering motion (performed by means of motor means, not illustrated, but of known type: see in this connection the European patent application just cited) to immerse the product P in the bath of the substance S taking with it (in fact pressing) the support element 1 as well, which must therefore have corresponding characteristics of yieldability such as to make it possible to immerse it in the substance S by the effect of the corresponding downward motion of the products P.

If - as in the illustrated example which is of this form - the support element 1 is constituted by a section of a conveyor constituting an enrobing mesh, the said result can be achieved simply by the effect of the general elasticity of the said conveyor, constituted - as already mentioned - by a network of interwoven metal wire.

The immersion movement of the products P into the substance S is not complete in the sense that the product P is immersed or dipped by pressing it downwardly in such a way that a part thereof - that is the part intended not to be enrobed - is however not covered by the substance S.

Figure 3 shows how this result can be obtained, for example, by regulating the lowering movement of the products P (and therefore the lowering stroke of the grip member 2) in a manner such that the upper part of the product P (by which is meant, the upper "polar" part) is maintained at a height at least slightly greater than the height of the free surface of the bath of the substance S.

This geometric condition may however not be essential. As already mentioned, the food substances currently utilised for enrobing, for example molten chocolate, sweet or savoury food cremes etc, are usually viscous. The immersion of a product in such a substance does not therefore necessarily have to be like immersion in a less viscous liquid, for example water or an aqueous solution. When utilising a rather viscous substance it can in fact very well happen that, because of the slowness with which a viscous substance "wets" a product immersed in it, the desired result (that is to say the fact that the enrobing substance does not cover the whole of the product P - for example - leaving the polar part thereof uncovered) can be achieved, at least in some cases, even by making the product P finish entirely below the plane of the free surface of the bath of the substance S. All this, naturally, is on condition that the product P is extracted from the said bath (according to criteria which will be illustrated better hereinafter) before the substance S has succeeded in reaching the part which it is desired to maintain exposed. Consequently the magnitude of the lowering stroke of the products P into the bath of substance S can be chosen as a function of the desired result taking into consideration also the viscosity of the substance S and the desired immersion time.

Figure 4 shows a subsequent phase of the process in which, after having released the product P immersed in the substance S (for example by the effect of the elimination of the subatmospheric present within it) the grip element 2 rises up again whilst the support 1 is retained in the lowered deformed position by one or more thrust or retainer elements 4, driven by respective motor members (of type known per se) not explicitly visible in the drawings.

By comparison of Figures 3 and 4 emerge the evident considerations on the basis of which the lowering motion of the products P into the substance S could also be obtained in a different manner from that described, but which is not part of the invention as disclosed in claim 1 and 6. At least in principle, in fact, the said lowering movement could be achieved simply by lowering the support element 1 with the products P previously disposed on it by the grip element 2 (or by functionally equivalent elements) with subsequent disengagement of the product, the lowering of the support element 1 being effected by means of the elements 4.

The arrangement of the invention is however preferred, since; at least in the case of rather light products P - such as for example aerated products - the products P may not follow the support element 1 in the lowering movement, with a tendency to "float" in a more or less extended manner in the bath of the substance S.

The products P can be constituted, for example, by pralines having a core of creme, for example chocolate flavoured, clad entirely or partly by an outer shell of wafer; this latter product - which is rather aerated - thus has a marked tendency to possible floating with respect to an enrobing substance such as chocolate. For this reason, the invention provides for lowering the products P in a positive manner by acting directly on the products P themselves by means of respective grip elements such as the element 2 described above.

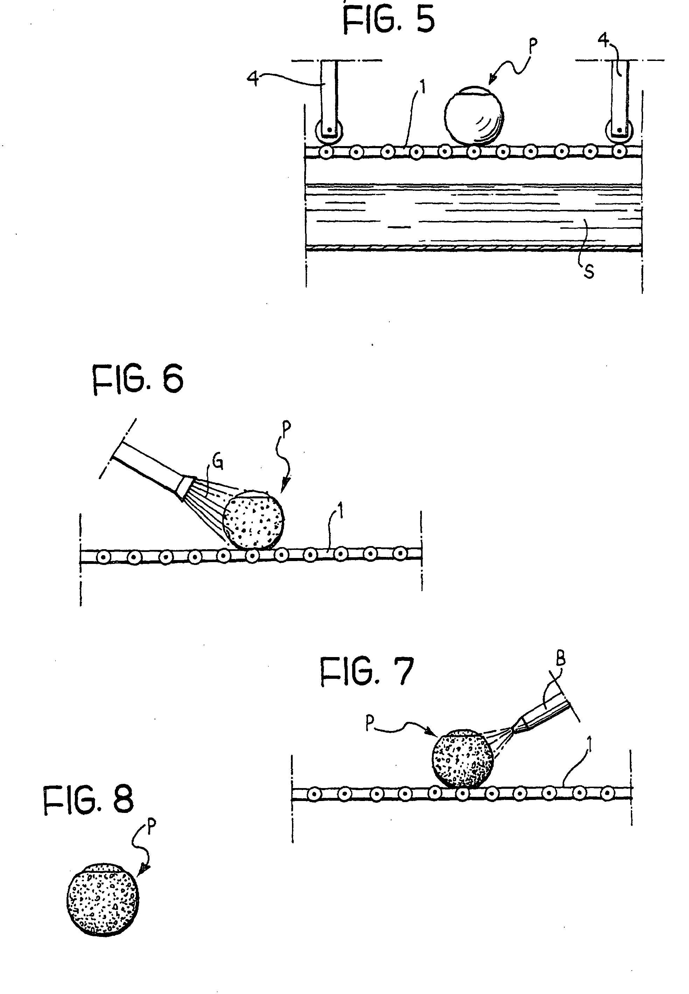

Returning to the sequence of the attached drawings, it is possible to see that, by biasing the presser elements 4 upwardly, starting from the position illustrated in figure 4, it is possible to achieve the upward return of the support element 1 (if the support 1 is constituted by an enrobing mesh, this taking place by the effect of the intrinsic elasticity of the mesh itself) thus causing the product P covered externally - with the exception of the polar part - by an enrobing layer of the substance S, to emerge from the bath of an enrobing substance S (figure 5).

At this point if, as is often the case, it is envisaged that the enrobing layer shall have a finishing component of granular material such as chopped nuts, grated coconut etc, the products P, preferably but not necessarily still supported on the support element 1, which can advantageously act as a transport element, are carried to a further treatment station (shown schematically, but of known type) where the granular component G of the covering is sprayed onto the products P as schematically illustrated in Figure 6.

According to criteria known per se, which do not require to be illustrated in more detail, it is then possible to subject the products P to a blowing operation as schematically indicated by the reference B in Figure 7, to remove those parts of the granular component which have not become retained on the product. This (Figure 8) leads to a finished product or a semi-finished product (for example in view of the possible application onto the polar part of a decorative formation) characterised in that it is enrobed only partially, that is with the exception of its polar part.

The description just provided makes it understood that the sequence of operations described can be performed at a very rapid rate such as is typical of an industrial production process for food products. Other important characteristics of the arrangement according to the invention are given by the possibility of obtaining a partial enrobing with very precise and repeatable characteristics, for example as far as the dimensions of the non-enrobed regions is concerned - this result is difficult to obtain with different techniques, such as for example spraying, etc..

It is however evident that the arrangement according to the invention is not limited to its possible application to products of spherical form intended to be enrobed with the single exception of the upper polar part. The arrangement according to the invention lends itself in fact to being utilised in relation to products of different shape (for example products of squashed spherical form,' products shaped like barrels, cones, cylinders, etc.). It will be appreciated likewise that whilst the embodiment described by'way of example essentially envisages that the part not clad by the enrobing is exclusively the upper part of the product, by exploiting the intrinsic viscosity of the enrobing substance it is possible to perform the immersion motion into the enrobing substance S not only from above as in the embodiment illustrated, but also in a lateral direction for example together with a centrifuging mechanism which causes the bath of enrobing substance S to adhere to the side walls of a container or tank driven to rotate. Returning to these arrangements - according to variants evident to the man skilled in the art as a function of these specific constructional requirements - it is possible, for example, to provide for enrobing of a product only on a lateral face thereof, thus leaving free from enrobement all the upper part and the lower part thereof.

Consequently, therefore, the principle of the invention remaining the same, the details of construction and the embodiments can be widely varied with respect to what has been described and illustrated, without by this departing from the ambit of the present invention, as defined by the annexed claims.

## Claims

1. A process for partially enrobing food products (P), comprising the operations of:
- providing a bath of a food substance (S) intended to constitute the enrobing material,
- immersing the products (P) to be enrobed in the said bath of enrobing substance (S) by the effect of a positive downward thrust action (2) exerted on the products (P) themselves, ensuring that the said enrobing substance (S) does not completely cover the products (P), and
- removing the products (P) from the said bath of enrobing substance incompletely clad and therefore partially enrobed by the said enrobing substance (S),
**characterised in that** it comprises the operations of:
- providing elastically yieldable support means (1) on which the said products (P) are deposited in such a way that the said support means (1) are taken with the products (P) themselves in the immersing movement into the said bath of enrobing substance (S),
- intervening (4) on the said support means (1) when they and the products (P) are in an immersed position in the said bath of enrobing substance (S), to retain the support means (1) and the products (P) deposited thereon in an immersed condition in the said bath of enrobing substance (S),
- releasing the product (p) from said thrust action (2) and
- releasing the said support means (1) from said intervention to cause the upward return of said support means (1) due to their intrinsic elasticity thus removing the incompletely clad and therefore partially enrobed products from said bath of enrobing substance.

2. A process according to claim 1, **characterised in that** the said products(P) are immersed in the said bath of enrobing substance (S) leaving the part of the products (P) intended not to be enrobed projecting from the bath.

3. A process according to claim 1, **characterised in that** said food substance is viscous and said products (P) are completely immersed in the said bath of enrobing substance, but for a time interval insufficient to allow the said viscous enrobing substance completely to cover the products (P) themselves.

4. A process according to any of claims 1 to 3, in which a component of granular material (G) is associated with the enrobing, **characterised in that** it includes the operation of spraying the said granular components (G) onto products removed from the said bath of enrobing substance (S).

5. A process according to claim 4, **characterised in that** it further includes exerting a blowing action (B) on the products (P) sprayed with the said granular component (G), for the purpose of removing from the products themselves those parts of the said granular component (G) not adhering to the products (P).

6. A device for partially enrobing food products (P), comprising:
- a bath of a food substance (S) intended to constitute the said enrobing,
- actuator means (2; 1, 4) including grip means (2) which immerse the product (P) in the said bath of enrobing substance (S) by means of a positive downward thrust action exerted on the products (P) themselves by making the said enrobing substance (S) cover the product (P) incompletely and then removing the incompletely covered and thus partially enrobed products (P) from the said bath of enrobing substance (S),
**characterised in that** it includes:
- elastically yieldable support means (1) adapted to support the products (P) deposited thereon and to be movable so as to be taken with the products (P) themselves upon immersion into the said bath of enrobing substance (S),
- thrust means (4) capable of acting on the said support means (1) when they are immersed, together with the products (P) deposited thereon, in the said bath of enrobing substance (S), to retain the products (P) themselves immersed in the said bath of enrobing substance (S),
and wherein said grip means (2) are adapted to release the products (P) from said downward thrust action while said support means (1) are acted upon by said thrust means (4), while said thrust means (4) are then biased upwardly to cause upward return of said support means (1) due to its intrinsic elasticity thus removing the incompletely clad and therefore partially enrobed products (P) from said bath of enrobing substance (S).

7. A device according to claim 6, **characterised in that** the said actuator means (2; 1, 4) immerse the product (P) in the said bath of enrobing substance (S) leaving the part of the product (P) intended not to be enrobed projecting from the bath.

8. A device according to claim 6, **characterised in that** said food substance is viscous and the said actuator means (2; 1, 4) immerse the product (P) completely in the said bath of enrobing substance, but for an interval of time insufficient for the viscous enrobing substance completely to cover the products (P) themselves.

9. A device according to any of claims 6 to 8, in which the said enrobing has an associated component of granular material, **characterised in that** it further includes distributor means for spraying products removed from the said bath of enrobing substance (S) with the said granular component (G).

10. A device according to claim 9, **characterised in that** it further includes a blower member (B) intended to act on products (P) sprayed with the said granular component (G) for the purpose of removing from these products that part of the said granular component which is not adherent to the product (P).

## Patentansprüche

1. Verfahren zum teilweisen Umkleiden von Lebensmittelprodukten (P) mit den folgenden Schritten:
- Vorsehen eines Bads aus einer Lebensmittelsubstanz (S), welche das umkleidende Material bilden soll,
- Eintauchen der zu umkleidenden Produkte (P) in das Bad aus der Umkleidungssubstanz (S) mittels einer positiven Abwärtsdruckaktion (2), welche auf die Produkte (P) selbst ausgeübt wird, während sichergestellt wird, dass die umkleidende Substanz (S) die Produkte (P) nicht vollständig bedeckt, und
- Entfernen der Produkte (P) aus dem Bad der Umkleidungssubstanz, nicht vollständig, sondern durch teilweise umkleidet durch die Umkleidungssubstanz (S),
**dadurch gekennzeichnet, dass** es die folgenden Schritte aufweist:
- Vorsehen von elastisch nachgiebigen Lagerungsmitteln (1), auf welchen die Produkte (P) so angeordnet werden, dass die Lagerungselement (1) mit den Produkten (P) bei der Eintauchbewegung in das Bad aus der Umkleidungssubstanz (S) mitgenommen werden,
- Einwirken (4) auf die Lagerungsmittel (1), wenn sie und die Produkte (P) sich in einer eingetauchten Position in dem Bad aus der Umkleidungssubstanz (S) befinden, um die Lagerungsmittel (I) und die darauf angeordneten Produkte (P) in das Bad aus der Umkleidungssubstanz (S) eingetaucht zu halten,
- Lösen der Druckaktion (2) auf das Produkt (P), und
- Lösen der Einwirkung auf die Lagerungsmittel (1), um die Rückkehr der Lagerungsmittel (1) nach oben aufgrund ihrer Elastizität zu verursachen und so die nicht vollständig, sondern nur teilweise umkleideten Produkte aus dem Bad aus der Umkleidungssubstanz zu entfernen.

2. Verfahren nach Anspruch 1, **dadurch gekennzeichnet, dass** die Produkte (P) in das Bad aus der Umkleidungssubstanz (S) so eingetaucht werden, dass der Teil der Produkte (P), der nicht umkleidet werden soll, aus dem Bad hervorsteht.

3. Verfahren nach Anspruch 1, **dadurch gekennzeichnet, dass** die Lebensmittelsubstanz viskos ist und dass die Produkte (P) vollständig in das Bad aus der Umkleidungssubstanz eingetaucht werden, jedoch nur für einen Zeitraum, der nicht ausreicht, um die Produkte (P) vollständig mit der viskosen Umkleidungssubstanz zu bedecken.

4. Verfahren nach einem der Ansprüche 1 bis 3, wobei eine Komponente aus kornförmigem Material (G) dem Umkleiden zugeordnet ist, **dadurch gekennzeichnet, dass** das Verfahren den Vorgang des Besprühens der aus dem Bad aus der Umkleidungssubstanz (S) entfernten Produkte mit den kornförmigen Komponenten (G) beinhaltet.

5. Verfahren nach Anspruch 4, **dadurch gekennzeichnet, dass** das Verfahren außerdem das Ausüben eines Blasvorgangs (B) auf die Produkte (P) beinhaltet, welche mit der kornförmigen Komponente (G) besprüht sind, um die Teile der kornförmigen Komponente (G) von den Produkten zu entfernen, welche den Produkten (P) nicht anhaften.

6. Vorrichtung zum teilweisen Umkleiden von Lebensmittelprodukten (P) mit:
- einem Bad aus einer Lebensmittelsubstanz (S), welche die Umkleidung bilden soll,
- Aktormitteln (2; 1, 4) mit Greifermitteln (2), welche das Produkt (P) in das Bad aus der Umkleidungssubstanz (S) eintauchen mittels einer positiven Abwärtsdruckaktion, welche auf die Produkte (P) selbst ausgeübt wird, so dass die Umkleidungssubstanz (S) dazu gebracht wird, das Produkt (P) nicht vollständig zu bedecken, und anschließendes Entfernen der unvollständig bedeckten und daher nur teilweise umkleideten Produkte (P) aus dem Bad aus der Umkleidungssubstanz (S),
**dadurch gekennzeichnet, dass** die Vorrichtung beinhaltet:
- elastisch nachgiebige Lagerungsmittel (1), welche die darauf angeordneten Produkte (P) lagern kann und welche so bewegbar ist, dass mit den Produkten (P) bei dem Eintauchen in das Bad aus der Umkleidungssubstanz (S) mitgenommen wird,
- Druckmittel (4), welche auf die Lagerungsmittel (1) einwirken können, wenn diese eingetaucht sind, zusammen mit den darauf angeordneten Produkten (P) in das Bad aus der Umkleidungssubstanz (S), um die Produkte (P) in das Bad aus der Umkleidungssubstanz (S) eingetaucht zu halten,
und wobei die Greifermittel (2) so ausgestaltet sind, dass sie die Abwärtsdruckaktion auf die Produkte (P) lösen, während die Druckmittel (4) auf die Lagerungsmittel (1) einwirken, während die Druckmittel (4) dann nach oben vorgespannt sind, um eine Rückkehr nach oben der Lagerungsmittel (1) aufgrund ihrer Elastizität zu bewirken und so die unvollständig bedeckten und daher teilweise umkleideten Produkte (P) aus dem Bad aus der Umkleidungssubstanz (S) zu entfernen.

7. Vorrichtung nach Anspruch 6, **dadurch gekennzeichnet, dass** die Aktormittel (2); 1, 4) das Produkt (P) in das Bad aus der Umkleidungssubstanz (S) eintauchen und dabei den Teil des Produkts (P), welcher nicht umkleidet werden soll, aus dem Bad hervorstehen lassen.

8. Vorrichtung nach Anspruch 6, **dadurch gekennzeichnet, dass** die Lebensmittelsubstanz viskos ist und dass die Aktormittel (2; 1, 4) das Produkt (P) vollständig in das Bad aus der Umkleidungssubstanz eintauchen, jedoch nur für einen Zeitraum, der nicht ausreicht, um die Produkte (P) vollständig mit der viskosen Umkleidungssubstanz zu bedecken.

9. Vorrichtung nach einem der Ansprüche 6 bis 8, wobei dem Umkleiden eine Komponente aus kornförmigem Material zugeordnet ist, **dadurch gekennzeichnet, dass** die Vorrichtung weiter Verteilermittel zum Besprühen von aus dem Bad aus der Umkleidungssubstanz (S) entfernten Produkte mit der kornförmigen Komponente (G) aufweist.

10. Vorrichtung nach Anspruch 9, **dadurch gekennzeichnet, dass** sie weiter ein Gebläse (B) aufweist, welches auf mit der kornförmigen Komponente (G) gesprühten Produkte (P) einwirkt, um den Teil der kornförmigen Komponente von diesen Produkten zu entfernen, welcher dem Produkt (P) nicht anhaftet.

## Revendications

1. Procédé pour enrober partiellement des produits alimentaires (P), comprenant les opérations dans lesquelles : '
- on se procure un bain d'une substance alimentaire (S) prévue pour constituer la matière d'enrobage,
- on immerge les produits (P) devant être enrobés dans ledit bain de substance d'enrobage (S) en appliquant une action de poussée positive vers le bas (2) exercée sur les produits (P) eux-mêmes, en s'assurant que ladite substance d'enrobage (S) ne recouvre pas complètement les produits (P), et
- on enlève les produits (P) dudit bain de substance d'enrobage, incomplètement revêtus et donc partiellement enrobés par ladite substance d'enrobage (S),
**caractérisé en ce qu'**il comprend les opérations dans lesquelles :
- on se procure des moyens de support (1) pouvant céder élastiquement, sur lesquels lesdits produits (P) sont déposés d'une manière telle que lesdits moyens de support (1) sont pris avec les produits (P) eux-mêmes dans le mouvement d'immersion dans ledit bain de substance d'enrobage (S),
- on intervient (4) sur lesdits moyens de support (1) lorsque ceux-ci et les produits (P) sont dans une position immergée dans ledit bain de substance d'enrobage (S), afin de retenir les moyens de support (1) et les produits (P) déposés sur ceux-ci dans un état immergé dans ledit bain de substance d'enrobage (S),
- on libère le produit (P) de ladite action de poussée (2) et
- on libère lesdits moyens de support (1) de ladite intervention pour provoquer le retour vers le haut desdits moyens de support (1) sous l'effet de leur élasticité intrinsèque, enlevant ainsi dudit bain de substance d'enrobage les produits incomplètement revêtus et donc partiellement enrobés.

2. Procédé selon la revendication 1, **caractérisé en ce que** lesdits produits (P) sont immergés dans ledit bain de substance d'enrobage (S) en laissant ressortir du bain la partie des produits (P) ne devant pas être enrobée.

3. Procédé selon la revendication 1, **caractérisé en ce que** ladite substance alimentaire est visqueuse et lesdits produits (P) sont immergés complètement dans ledit bain de substance d'enrobage, mais pendant un intervalle de temps insuffisant pour permettre à ladite substance visqueuse d'enrobage de recouvrir complètement les produits (P) eux-mêmes.

4. Procédé selon l'une quelconque des revendications 1 à 3, dans lequel un constituant de matière granulaire (G) est associé à l'enrobage, **caractérisé en ce qu'**il comprend l'opération consistant à pulvériser lesdits constituants granulaires (G) sur des produits enlevés dudit bain de substance d'enrobage (S).

5. Procédé selon la revendication 4, **caractérisé en ce qu'**il comprend en outre l'application d'une action de soufflage (B) sur les produits (P) ayant reçu par pulvérisation ledit constituant granulaire (G), afin d'enlever des produits eux-mêmes les parties dudit constituant granulaire (G) n'adhérant pas aux produits (P).

6. Dispositif pour enrober partiellement des produits alimentaires (P), comportant :
- un bain d'une substance alimentaire (S) destiné à constituer ledit enrobage,
- des moyens actionneurs (2 ; 1, 4) comprenant un moyen de prise (2) qui immerge le produit (P) dans ledit bain de substance d'enrobage (S) à l'aide d'une action de poussée positive vers le bas exercée sur les produits (P) eux-mêmes en amenant ladite substance d'enrobage (S) à recouvrir le produit (P) incomplètement, puis en enlevant dudit bain de substance d'enrobage (S) les produits (P) incomplètement recouverts et donc partiellement enrobés,
**caractérisé en ce qu'**il comprend :
- des moyens de support (1) pouvant céder élastiquement, conçus pour supporter les produits (P) déposés sur ceux-ci et pour pouvoir être déplacés afin d'être pris avec les produits (P) eux-mêmes lors d'une immersion dans ledit bain de substance d'enrobage (S),
- des moyens de poussée (4) pouvant agir sur lesdits moyens de support (1) lorsqu'ils sont immergés, en même temps que les produits (P) déposés sur ceux-ci, dans ledit bain de substance d'enrobage (S), afin de retenir les produits (P) eux-mêmes immergés dans ledit bain de substance d'enrobage (S),
et dans lequel lesdits moyens de prise (2) sont conçus pour libérer les produits (P) de ladite action de poussée vers le bas, tandis que lesdits moyens de poussée (4) agissent sur lesdits moyens de support (1), tandis que lesdits moyens de poussée (4) sont ensuite rappelés vers le haut pour provoquer le retour desdits moyens de support vers le haut (1) sous l'effet de leur élasticité intrinsèque, enlevant ainsi dudit bain de substance d'enrobage (S) les produits (P) incomplètement revêtus et donc partiellement enrobés.

7. Dispositif selon la revendication 6, **caractérisé en ce que** lesdits moyens actionneurs (2 ; 1, 4) immergent le produit (P) dans ledit bain de substance d'enrobage (S) en laissant ressortir du bain la partie du produit (P) ne devant pas être enrobée.

8. Dispositif selon la revendication 6, **caractérisé, en ce que** ladite substance alimentaire est visqueuse et lesdits moyens actionneurs (2 ; 1, 4) immergent le produit (P) complètement dans ledit bain de substance d'enrobage, mais pendant un intervalle de temps insuffisant pour que la substance visqueuse d'enrobage recouvre complètement les produits (P) eux-mêmes.

9. Dispositif selon l'une quelconque des revendications 6 à 8, dans lequel ledit enrobage comporte un constituant associé en matière granulaire, **caractérisé en ce qu'**il comporte en outre des moyens distributeurs destinés à pulvériser sur des produits enlevés dudit bain de substance d'enrobage (S) ledit constituant granulaire (G).

10. Dispositif selon la revendication 9, **caractérisé en ce qu'**il comporte en outre un élément souffleur (B) conçu pour agir sur des produits (P) sur lesquels ledit constituant granulaire (G) est pulvérisé afin d'enlever de ces produits la partie dudit constituant granulaire qui n'a pas adhéré au produit (P).
